# FASCICULE DE BREVET EUROPEEN

(11) **EP 3 801 159 B1**
(45) Date de publication et mention de la délivrance du brevet: **22.05.2024**
(21) Numéro de dépôt: 19737178.4
(22) Date de dépôt: 29.05.2019
(51) Int. Cl.: A47J 43/07

(54) **APPAREIL DE PRÉPARATION ET/OU DE CUISSON D'ALIMENTS, TEL QU'UN ROBOT MÉNAGER DE CUISINE INTÉGRANT UN DISPOSITIF DE PESAGE**
VORRICHTUNG ZUM ZUBEREITEN UND / ODER KOCHEN VON NAHRUNGSMITTELN, WIE ETWA EINE KÜCHENMASCHINE, MIT INTEGRIERTER WAAGE
APPLIANCE FOR PREPARING AND/OR COOKING FOOD, SUCH AS A FOOD PROCESSOR WITH INTEGRATED WEIGHING DEVICE

(30) Priorité: 05.06.2018 FR 1870649
(43) Date de publication de la demande: 14.04.2021
(73) Titulaire: BEABA, 75008 Paris (FR)
(72) Inventeur: NOCA, Laurent, 26390 HAUTERIVES (FR)
(74) Mandataire: Gevers & Orès
(86) Numéro de dépôt international: PCT/FR2019/051277
(87) Numéro de publication internationale: WO 2019/234329

(56) Documents cités:
- EP-A1- 3 064 107
- WO-A1-2017/003313
- DE-T5-112015 002 964
- GB-A- 2 434 740
- GB-A- 2 435 411
- US-A- 5 799 567
- US-A1- 2018 073 915

## Description

La présente invention concerne le domaine du petit électroménager destiné au réchauffement de récipients alimentaires et/ou à la cuisson d'aliments et/ou à la préparation d'aliments. Préférentiellement, l'invention s'applique au domaine du petit électroménager de puériculture mais de manière non-exclusive.

Il existe de nombreux appareils de petit électroménager dédiés notamment à la préparation des aliments et à leur cuisson ou non au sein d'un même bol associé à un dispositif de pesage non intégré de telle sorte que les aliments ou le contenu du bol est pesé hors de l'appareil, ce qui est relativement peu pratique et parfois peu précis lors de suivi de recette complexes. Il a été développé de nombreux appareils de préparation et/ou de cuisson intégrant un dispositif de pesage relié à une unité de commande équipée d'un afficheur agencé sur la base de l'appareil ou sur une autre portion de l'appareil visible d'un utilisateur. L'intérêt de l'intégration de cette balance réside dans la rapidité d'exécution et la simplicité du pesage et également dans le fait qu'il est aisé d'implémenter dans l'appareil des commandes liées à des recettes incluant la pesée d'aliments.

Certains dispositifs de pesage intégrés peuvent se présenter sous la forme d'un plateau ou d'un tiroir mobile sortant de la base des appareils, sur lequel on positionne le bol de préparation ou on pose directement des aliments à peser. Cet agencement a pour principal défaut le déplacement du contenu à peser du plateau de pesage dans le bol prêt à l'emploi ou bien le déplacement du bol lui-même, ce qui ne présente pas un réel changement par rapport à une pesée avec une balance non intégrée à part sur le fait que le poids est affiché sur l'appareil et peut être pris en compte dans l'exécution automatique de recettes.

D'autres dispositifs de pesage sont intégrés dans les pieds de l'appareil, ce qui présente l'avantage d'être compact et totalement intégré dans l'appareil. Cependant, les pieds supportent le poids de l'ensemble de l'appareil, ce qui est complexe pour le tarage du dispositif de pesage et qui diminue la précision de pesée du bol et de son contenu uniquement. GB2435411A divulgue un tel dispositif de l'état de l'art.

L'invention a pour but de remédier à tout ou partie des inconvénients précités en proposant un appareil de préparation et/ou de cuisson d'aliments intégrant un dispositif de pesage en son sein tout en conservant une précision de pesée ciblée sur le bol et son contenu.

À cet effet, l'invention a pour objet un appareil de préparation et/ou de cuisson d'aliments, tel qu'un robot ménager de cuisine, comprenant au moins :
un bol de préparation et/ou de cuisson d'aliments comportant au moins un volume interne de cuisson et/ou de préparation,
une base sur laquelle est disposé le bol en état de fonctionnement de l'appareil, la base comprenant au moins un fond et au moins une paroi latérale s'étendant depuis le support de fond dans une direction sensiblement sécante, le fond et la au moins une paroi latérale délimitant un volume interne,
un dispositif de pesage configuré pour peser au moins le contenu du bol de l'appareil comprenant au moins deux capteurs de pesage,
caractérisé en ce que le dispositif de pesage est agencé dans le volume interne de la base, et en ce que l'appareil comprend une plaque support distincte de la base et agencée en regard du fond de la base, les capteurs de pesage comprenant chacun au moins une première portion positionnée sur le fond de la base et au moins une deuxième portion positionnée sur une partie de la plaque support.

Grâce à cet agencement, il est possible d'intégrer la fonction de pesée dans l'appareil de manière simple et de permettre la pesée du contenu du bol uniquement car le dispositif de pesage se trouve à l'intérieur de la base de l'appareil et non à l'extérieur. En outre, la position du au moins un capteur entre le fond de la base et la plaque support est avantageuse car elle autorise un mouvement de déformation en translation selon un axe Z-Z, d'autant plus que le fond est conformé pour supporter le poids de l'intégralité des composants de l'appareil à l'exception de la plaque support.

Préférentiellement, le dispositif de pesage comprend plusieurs capteurs de pesage, encore plus préférentiellement trois ou quatre capteurs de pesage, de préférence identiques, ce qui permet d'accroitre la précision de pesée.

Selon une caractéristique de l'invention, chaque capteur de pesage est agencé à cheval entre le fond de la base et la plaque support.

Avantageusement, le dispositif de pesage est positionné sur le fond de la base dans un ou plusieurs logements dédiés et aménagés sur le fond de la base, ce qui permet d'isoler les capteurs de pesage du reste des composants de la base de sorte à avoir une mesure précise de poids du bol et de son contenu avec le moins d'élément perturbateur possible.

Selon une caractéristique de l'invention, au moins un des capteurs de pesage est un capteur à jauge de déformation. Préférentiellement tous les capteurs de pesage sont des capteurs à jauge de déformation.

Selon une caractéristique de l'invention, chaque capteur comprend une bride couvrant la jauge de déformation.

Selon une caractéristique de l'invention, le dispositif de pesage comprend quatre capteurs de pesage dont les jauges de déformation sont connectées en un pont de Wheatstone.

Selon une caractéristique de l'invention, les capteurs de pesage sont reliés entre eux par une connexion filaire.

Selon une caractéristique de l'invention, les capteurs de pesage s'étendent dans un plan sensiblement parallèle au plan dans lequel le fond de la base s'étend.

Selon une caractéristique de l'invention, le fond de la base s'étend dans un plan sensiblement parallèle au plan dans lequel la plaque support s'étend.

Afin de fixer chaque jauge de déformation, chacune des jauges de déformation coopère avec un pion ménagé sur la plaque support et repose en partie sur la paroi latérale.

Avantageusement, les capteurs de pesage sont agencés à distance les uns des autres et préférentiellement aux coins de la base.

Selon une caractéristique de l'invention, le nombre de capteurs de pesage est déterminé par la géométrie de la base. Par exemple, lorsque la base est quadrangulaire, le dispositif de pesage comprend préférentiellement quatre capteurs de pesage agencés préférentiellement chacun à chaque coin de la base.

Selon une caractéristique de l'invention, le bol comprend une portion inférieure conformée pour coopérer avec un socle agencé sur la base de l'appareil.

Selon une caractéristique de l'invention, la base peut être de forme polygonale par exemple rectangulaire ou cylindrique ou tronconique.

Selon une caractéristique de l'invention, le fond de la base est sensiblement parallèle au socle du bol.

Selon une caractéristique de l'invention, la au moins une paroi latérale comprend un rebord périphérique formant un congé en périphérie du fond de la base.

Selon une caractéristique de l'invention, le volume interne de la base est clos en partie par le socle du bol et en partie par une face supérieure. Avantageusement, le socle du bol et la face supérieure peuvent être deux pièces distinctes ou une pièce d'un seul tenant.

Avantageusement, la face supérieure s'étend dans un plan sensiblement incliné par rapport au plan dans lequel le socle du bol s'étend, ce qui améliore l'ergonomie de l'appareil.

Avantageusement, le fond présente une géométrie conformée pour isoler le câblage des différents composants de l'appareil afin que ces derniers ne gênent pas le fonctionnement desdits composants. En d'autres termes, le fond de la base permet de cantonner le câblage en partie inférieure de la base.

Selon une caractéristique de l'invention, le fond de la base est agencé sous le socle du bol et la face supérieure de la base.

Avantageusement, le fond de la base peut être formé de matière avec la au moins une paroi latérale de la base ou bien distinctement de la au moins une paroi latérale de la base.

Selon une caractéristique de l'invention, l'appareil comprend au moins un pied et préférentiellement plusieurs pieds, agencé sur la plaque support de manière indépendante de la position des capteurs de pesage.

Selon une caractéristique de l'invention, la plaque support comprend une première face en regard du fond de la base et une deuxième face, opposée à la première face, sur laquelle le au moins un pied et préférentiellement les pieds de l'appareil sont positionnés.

Selon une caractéristique de l'invention, l'appareil comprend une unité de commande.

Selon une caractéristique de l'invention, l'unité de commande est logée sur la base, préférentiellement dans la colonne sous la cuve et l'organe de chauffe.

Selon une caractéristique de l'invention, l'unité de commande comprend plusieurs composants dont au moins une carte électronique et une mémoire.

Selon une caractéristique de l'invention, l'unité de commande est configurée pour commander la mise en fonctionnement de l'appareil par un actionneur se présentant sous la forme d'un bouton poussoir.

Selon une caractéristique de l'invention, l'unité de commande est configurée pour piloter le dispositif de pesage.

Selon une caractéristique de l'invention, l'unité de commande pilote le moteur d'entrainement de l'appareil.

Selon une caractéristique de l'invention, l'unité de commande est configurée pour commander l'organe de chauffe.

Selon une caractéristique de l'invention, l'unité de commande comprend un organe d'affichage configuré pour afficher des informations de température mesurées par un capteur de température et/ou des informations de vitesse acquise par l'unité de commande et/ou des informations de poids du contenu du bol, mesurées par le au moins un capteur de pesage du dispositif de pesage et/ou le déroulement de programmes de recettes préalablement enregistrés, etc.

Selon une caractéristique de l'invention, l'unité de commande comprend au moins un et préférentiellement une pluralité d'éléments de commande sous forme de boutons qui permettent la sélection de modes ou de points de contrôle tels que la température de la cuve, le temps de cuisson, la vitesse de rotation de l'organe de coupe (non représenté), le temps de coupe/de mixage ou de mélange, etc.

Selon une caractéristique de l'invention, les informations de température sont mesurées par un capteur de température (non représenté) présent dans le bol ou dans la cuve par exemple, ledit capteur de température communiquant avec l'unité de commande et étant contrôlé par l'unité de commande de sorte que lorsque la cuve ou le bol atteint une température sélectionnée ou une température seuil, le capteur de température envoie l'information de température à l'unité de commande qui l'affiche et qui en fonction de l'action à réaliser, soit arrête l'organe de chauffe, soit prolonge le temps de fonctionnement de l'organe de chauffe, par exemple.

Selon une caractéristique de l'invention, les informations de vitesse de rotation de l'organe de coupe sont recueillies par l'unité de commande en fonction de la vitesse de rotation de l'arbre d'entrainement entrainant l'organe de coupe et/ou de mélange et entraîné par le moteur et la transmission.

Selon une caractéristique de l'invention, les informations de poids mesurées par le dispositif de pesage sont recueillies par l'unité de commande et peuvent être affichées sur l'organe d'affichage de l'unité de commande.

Selon une caractéristique de l'invention, les programmes de recettes sont enregistrés dans la mémoire de l'unité de commande. Avantageusement, chaque programme comprend une suite d'actions à réaliser qui peuvent être par exemple, la mise en fonctionnement ou en arrêt du moteur d'entrainement à une vitesse déterminée pour le mélange ou pour la coupe du contenu du bol ; la mise en fonctionnement ou en arrêt de l'organe de chauffe de l'appareil pour cuire ou réchauffer le contenu du bol ; la mise en fonctionnement du dispositif de pesage; le versement d'une préparation dans le bol ou le retrait d'une préparation du bol, etc.

Selon une caractéristique de l'invention, la suite d'actions à réaliser peut être opérée automatiquement et/ou manuellement suivant le type d'action à réaliser : par exemple, on verse manuellement un aliment dans le bol et on lance manuellement la coupe dudit aliment, la vitesse est adaptée automatiquement en fonction de l'aliment et le moteur s'arrête automatiquement selon un temps déterminé.

Selon une caractéristique de l'invention, l'appareil comprend une colonne comportant un organe de chauffe et une cuve. Avantageusement, la cuve est destinée à être chauffée par l'organe de chauffe et configurée pour recevoir de l'eau à bouillir au moyen de l'organe de chauffe.

Selon une caractéristique de l'invention, la cuve est préférentiellement en communication fluidique avec le bol.

Selon une caractéristique de l'invention, l'organe de chauffe est piloté par l'unité de commande c'est-à-dire l'unité de commande ordonne la mise en fonctionnement ou l'arrêt de l'organe de chauffe.

Selon une caractéristique de l'invention, la colonne est fermée hermétiquement par un bouchon.

Selon une caractéristique de l'invention, la colonne est positionnée sur la base à côté du bol.

Selon une caractéristique de l'invention, l'appareil selon l'invention comprend en outre un couvercle configuré pour obturer au moins partiellement le bol.

Selon une caractéristique de l'invention, l'appareil comprend un moteur d'entrainement relié par une transmission et un arbre d'entrainement à un organe de coupe et/ou de mélange disposé dans le bol.

L'invention sera mieux comprise, grâce à la description ci-après, qui se rapporte à un mode de réalisation selon la présente invention, donné à titre d'exemple non limitatif et expliqué avec référence aux figures schématiques annexées. Les figures schématiques annexées sont listées ci-dessous :
[Fig.1] est une vue en perspective de l'appareil selon l'invention,
[Fig.2] est une vue en coupe longitudinale, selon un axe de coupe A-A illustré en figure 1, de l'appareil selon l'invention,
[Fig.3] est une vue en coupe, selon un axe de coupe B-B illustré en figure 1, de l'appareil selon l'invention,
[Fig.4] est une vue partielle en perspective de l'appareil selon l'invention,
[Fig.5] est une vue partielle en perspective de l'appareil selon l'invention,
[Fig.6] est une vue de dessus en coupe de la base de l'appareil selon l'invention,
[Fig.7] est une vue en coupe partielle d'un détail de la base de l'appareil selon l'invention,
[Fig.8] est une vue en perspective de la figure 7.

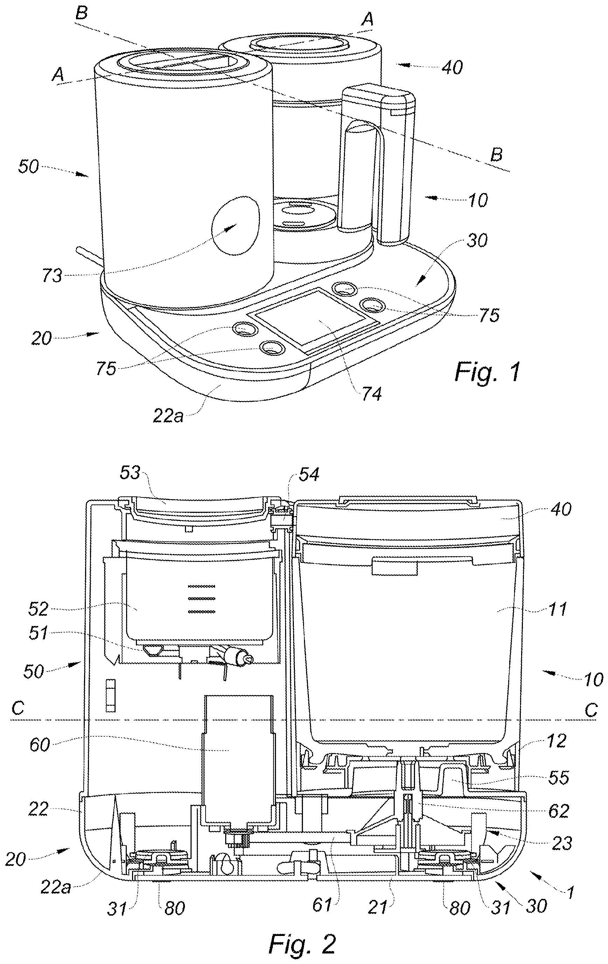

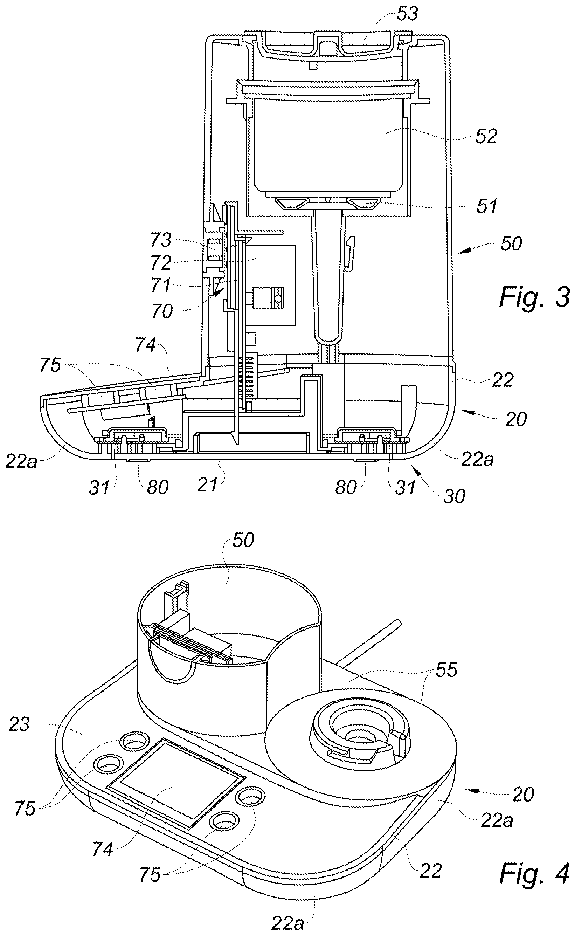

L'appareil 1 selon l'invention est un appareil de préparation et/ou de cuisson d'aliments tel qu'un robot ménager de cuisine. Comme illustré en figure 1, l'appareil 1 comprend un bol 10 de préparation et/ou de cuisson d'aliments, une base 20 sur laquelle est disposé le bol 10 en état de fonctionnement de l'appareil 1, un dispositif de pesage 30 configuré pour peser au moins le contenu du bol 10 de l'appareil 1. L'appareil 1 selon l'invention comprend en outre un couvercle 40 configuré pour obturer au moins partiellement le bol 10, une colonne 50 comportant un organe de chauffe 51 et une cuve 52. L'appareil 1 selon l'invention comprend en outre une unité de commande 70 illustrée par exemple en figure 3. L'appareil 1 selon l'invention comprend un moteur d'entrainement 60 relié par une transmission 61 et un arbre d'entrainement 62 à un organe de coupe et/ou de mélange (non représenté) disposé dans le bol 10 comme illustré en figure 2.

Comme illustré en figure 2, le bol 10 comporte un volume interne 11 du bol 10. Le bol 10 peut comprendre un panier de cuisson (non représenté) adapté au volume interne 11. Le bol 10 est fermé par le couvercle 40. Le bol comprend une portion inférieure 12 conformée pour coopérer avec un socle du bol 55 agencé sur la base 20 de l'appareil 1, comme on peut le voir en figure 4.

Comme illustré notamment aux figures 2, 3, 7 et 8, la base 20 comprend un fond 24 et au moins une paroi latérale 22 s'étendant depuis le fond 21 dans une direction sensiblement sécante, le fond 24 et la au moins une paroi latérale 22 délimitant un volume interne. Dans l'exemple illustré aux figures 1 à 6, la base 20 est de forme rectangulaire, cependant cette dernière peut revêtir une autre forme sans sortir de l'invention. Par exemple, la base 20 peut être de forme polygonale par ou cylindrique ou tronconique.

Selon l'invention, le fond 24 de la base 20 est sensiblement parallèle au socle 55 de l'appareil 1. Par ailleurs, la au moins une paroi latérale 22 comprend un rebord 22a périphérique formant un congé en périphérie du fond 24 de la base 20 comme il est possible de le voir sur les figures 1 à 8.

Conformément à l'invention, le volume interne de la base 20 est fermé en partie par le socle du bol 55 et en partie par une face supérieure 23 comme illustré en figure 4 par exemple. Le socle du bol 55 et la face supérieure 23 peuvent être deux pièces distinctes ou une pièce d'un seul tenant. Avantageusement, la face supérieure 23 s'étend dans un plan sensiblement incliné par rapport au plan dans lequel le socle du bol 55 s'étend, ce qui améliore l'ergonomie de l'appareil 1.

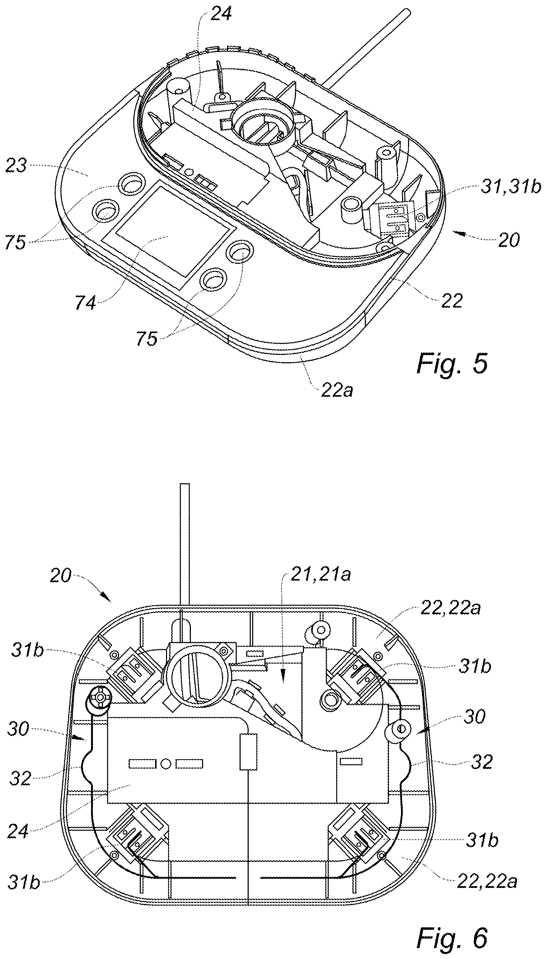

Comme représenté en figure 5 notamment, le fond 24 est préférentiellement agencé sous le socle du bol 55 et la face supérieure 23. Le fond 24 peut être formé de matière avec la au moins une paroi latérale 22 de la base 20 ou bien distinctement de la au moins une paroi latérale 22 de la base 20. Dans l'exemple illustré aux figures, le support séparateur 24 est distinct de la paroi latérale 22.

Selon l'invention, l'appareil comprend en outre une plaque support 21 agencée en regard du fond 24 de la base 20. La plaque support 21 comprend une première face 21a placée en regard du fond 24 de la base 20 et une deuxième face 21b opposée à la première face 21a. L'appareil 1 comprend une pluralité de pieds 80 agencés sur la deuxième face 21b de la plaque support 21 indifféremment de la position des capteurs de pesage 31, comme illustrés aux figures 2, 3, 7 et 8.

Conformément à l'invention, le dispositif de pesage 30 est configuré pour peser au moins le contenu du bol 10 de l'appareil 1. Le dispositif de pesage 30 comprend au moins un capteur de pesage 31 et préférentiellement quatre capteurs de pesage 31 identiques comme illustré notamment en figure 6. Le dispositif de pesage 30 est positionné dans le volume interne de la base 20, sur le fond 24 de la base 20.

Dans l'exemple illustré selon l'invention, les capteurs de pesage 31 sont des capteurs à jauge de déformation. Chaque capteur 31 comprend une bride 31a couvrant la jauge 31b. Chaque jauge de déformation 31b est connectée en un pont de Wheatstone. Les capteurs 31 sont reliés entre eux par une connexion filaire 32.

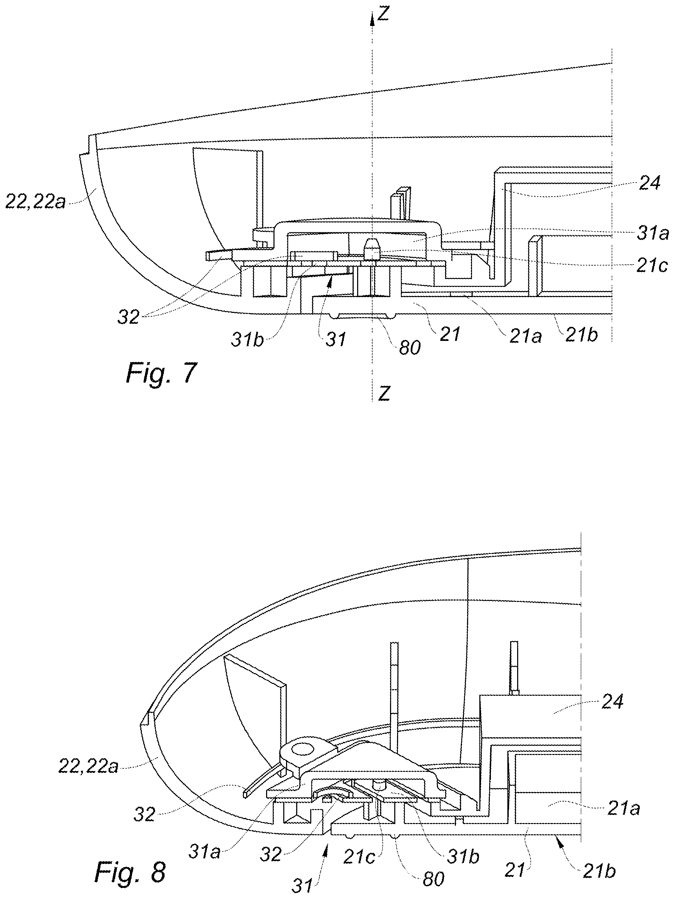

Comme on peut le voir notamment en figure 6, les capteurs 31 s'étendent dans un plan sensiblement parallèle au plan dans lequel le fond 24 de la base 20 s'étend. Plus particulièrement, chaque capteur 31 comprend au moins une première portion positionnée sur le fond 24 de la base 20 et au moins une deuxième portion positionnée sur une partie de la plaque support 21 comme illustré en détail aux figures 7 et 8. Chaque jauge de déformation 31b coopère avec un pion 21c de la plaque support 21 et repose en partie sur le fond 24 ou la partie latérale 22 de la base 20, et plus particulièrement sur le rebord 22a de la paroi latérale 22. Comme on peut le voir en figure 6, les capteurs 31 sont avantageusement agencés à distance les uns des autres et préférentiellement aux coins de la base 20. Bien entendu, le nombre de capteurs de pesage 31 est déterminé par la géométrie globale de la base. Par exemple, lorsque la base est quadrangulaire, le dispositif de pesage comprend préférentiellement quatre capteurs de pesage agencés préférentiellement chacun à chaque coin de la base.

Conformément à l'invention et comme illustré notamment en figure 3, l'unité de commande 70 est logée dans la colonne 50 sous la cuve 52 et l'organe de chauffe 51. Bien entendu, cet agencement n'est pas limitatif et l'unité de commande pourrait très bien être agencée dans une autre partie de l'appareil 1 par exemple dans la base 20 sans pour autant sortir de l'invention. L'unité de commande 70 comprend plusieurs composants dont au moins une carte électronique 71 et une mémoire 72 comme illustré en figure 3.

Conformément à l'invention, l'unité de commande 70 est configurée pour commander la mise en fonctionnement de l'appareil 1 par un actionneur 73 se présentant sous la forme d'un bouton poussoir, dans l'exemple illustré aux figures 1 et 3. En outre, l'unité de commande pilote également le moteur d'entrainement 60.

Selon l'invention, l'unité de commande 70 comprend un organe d'affichage 74 configuré pour afficher des informations de température et/ou des informations de vitesse et/ou des informations de poids du contenu du bol et/ou le déroulement de programmes de recettes préalablement enregistrés, etc. Par ailleurs, l'unité de commande 70 comprend au moins un et préférentiellement une pluralité d'éléments de commande 75 sous forme de boutons qui permettent la sélection de modes ou de points de contrôle tels que la température de la cuve, le temps de cuisson, la vitesse de rotation de l'organe de coupe (non représenté), le temps de coupe/de mixage ou de mélange, etc.

Conformément à l'invention, les informations de température sont mesurées par un capteur de température (non représenté) présent dans le bol 10 ou dans la cuve 52 par exemple, ledit capteur de température communiquant avec l'unité de commande 70 et étant contrôlé par l'unité de commande 70 de sorte que lorsque la cuve ou le bol atteint une température sélectionnée ou une température seuil, le capteur de température envoie l'information de température à l'unité de commande 70 qui l'affiche et qui en fonction de l'action à réaliser, soit arrête l'organe de chauffe, soit prolonge le temps de fonctionnement de l'organe de chauffe, par exemple.

Conformément à l'invention, les informations de vitesse de rotation de l'organe de coupe sont recueillies par l'unité de commande 70 en fonction de la vitesse de rotation de l'arbre d'entrainement 62 entrainant l'organe de coupe et/ou de mélange et entraîné par le moteur 60 et la transmission 61.

Conformément à l'invention, les informations de poids sont mesurées par le dispositif de pesage 30, recueillies par l'unité de commande 70 et peuvent être affichées sur l'organe d'affichage 74.

Conformément à l'invention, les programmes de recettes sont enregistrés dans la mémoire 72 de l'unité de commande 70, chaque programme comprend une suite d'actions à réaliser qui peuvent être par exemple, la mise en fonctionnement ou en arrêt du moteur d'entrainement 60 à une vitesse déterminée pour le mélange ou pour la coupe du contenu du bol 10 ; la mise en fonctionnement ou en arrêt de l'organe de chauffe 51 de l'appareil 1 pour cuire le contenu du bol 10; la mise en fonctionnement du dispositif de pesage 30; le versement d'une préparation dans le bol 10 ou le retrait d'une préparation du bol 10, etc. La suite d'actions à réaliser peut être opérée automatiquement et/ou manuellement suivant le type d'action à réaliser : par exemple, on verse manuellement un aliment dans le bol et on lance manuellement la coupe dudit aliment, la vitesse est adaptée automatiquement en fonction de l'aliment et le moteur s'arrête automatiquement selon un temps déterminé.

Conformément à l'invention, la colonne 50 est fermée hermétiquement par un bouchon 53. La colonne 50 est positionnée sur la base 20 à côté du bol 10. La colonne 50 peut être réalisée d'un seul tenant avec le socle 55 du bol 10 ou bien distinctement. Avantageusement, la cuve 52 est destinée à être chauffée par l'organe de chauffe 51 et configurée pour recevoir de l'eau à bouillir au moyen de l'organe de chauffe 51. La cuve 52 est préférentiellement en communication fluidique avec le bol 10 comme on peut le voir en figure 2, la vapeur traversant un conduit 54 reliant la colonne 50 au bol 10. Avantageusement, l'organe de chauffe 51 est piloté par l'unité de commande 70 c'est-à-dire l'unité de commande ordonne la mise en fonctionnement ou l'arrêt de l'organe de chauffe 51, et elle peut commander, dans une version optimisée de l'appareil 1, la puissance de chauffe de l'organe de chauffe 51.

Bien entendu, l'invention n'est pas limitée au mode de réalisation décrit et représenté aux figures annexées. Des modifications restent possibles, notamment du point de vue de la constitution des divers éléments ou par substitution d'équivalents techniques, tant qu'elles ne sortent pas du domaine de protection de l'invention telle que définie par les revendications ci-jointes.

## Revendications

1. Appareil de préparation et/ou de cuisson d'aliments (1), tel qu'un robot ménager de cuisine, comprenant au moins :
- un bol (10) de préparation et/ou de cuisson d'aliments comportant au moins un volume interne de cuisson et/ou de préparation,
- une base (20) sur laquelle est disposé le bol (10) en état de fonctionnement de l'appareil (1), la base (20) comprenant au moins un fond (24) et au moins une paroi latérale (22) s'étendant depuis le fond (24) dans une direction sensiblement sécante, le fond (24) et la au moins une paroi latérale (22) délimitant un volume interne,
- un dispositif de pesage (30) configuré pour peser au moins le contenu du bol (10) de l'appareil (1) comprenant au moins deux capteurs de pesage (31),
**caractérisé en ce que** le dispositif de pesage (30) est agencé dans le volume interne de la base (20), et **en ce que** l'appareil (1) comprend une plaque support (21) distincte de la base (20) et agencée en regard du fond (24) de la base (20), les capteurs de pesage (31) comprenant chacun au moins une première portion positionnée sur le fond (24) de la base (20) et au moins une deuxième portion positionnée sur une partie de la plaque support (21).

2. Appareil, selon la revendication 1, dans lequel le dispositif de pesage (30) est positionné sur le fond (24) de la base (20) dans un ou plusieurs logements dédiés et aménagés sur le fond (24) de la base (20).

3. Appareil selon l'une quelconque des revendications 1 ou 2, dans lequel au moins un des capteurs de pesage (31) est un capteur à jauge de déformation (31b).

4. Appareil selon la revendication 3, dans lequel le dispositif de pesage comprend quatre capteurs de pesage (31) dont les jauges de déformation (31b) sont connectées en un pont de Wheatstone.

5. Appareil selon l'une quelconque des revendications 1 à 4, dans lequel le fond (24) peut être formé de matière avec la au moins une paroi latérale (22a) de la base (20) ou bien distinctement de la au moins une paroi latérale (22a) de la base (20).

6. Appareil selon l'une quelconque des revendications 1 à 5, dans lequel la au moins une paroi latérale (22a) comprend un rebord périphérique formant un congé en périphérie du fond (24) de la base (20).

7. Appareil selon l'une quelconque des revendications 1 à 6, dans lequel le bol (10) comprend une portion inférieure (12) conformée pour coopérer avec un socle (55) agencé sur la base de l'appareil (1).

8. Appareil selon l'une quelconque des revendications 1 à 7, comprenant une unité de commande (70) configurée pour piloter au moins le dispositif de pesage (30).

9. Appareil selon la revendication 8, dans lequel l'unité de commande comprend un organe d'affichage (74) configuré pour afficher des informations de poids du contenu du bol (10), mesurées par le au moins un capteur de pesage (31).

10. Appareil selon l'une quelconque des revendications 1 à 9, comprenant au moins un pied (80) agencé sur la plaque support (21) de manière indépendante de la position des capteurs de pesage (31).

## Patentansprüche

1. Einrichtung zum Vorbereiten und/oder Kochen von Nahrungsmitteln (1), wie etwa eine Küchenmaschine, umfassend mindestens:
- eine Schüssel (10) zum Vorbereiten und/oder Kochen von Nahrungsmitteln, die mindestens ein inneres Koch- und/oder Vorbereitungsvolumen umfasst,
- eine Basis (20), auf der die Schüssel (10) im Betriebszustand der Einrichtung (1) aufgestellt wird, wobei die Basis (20) mindestens einen Boden (24) und mindestens eine Seitenwand (22) umfasst, die sich ausgehend vom Boden (24) in im Wesentlichen einer Sekantenrichtung erstreckt, wobei der Boden (24) und die mindestens eine Seitenwand (22) ein Innenvolumen begrenzen,
- eine Wiegevorrichtung (30), die konfiguriert ist, um mindestens den Inhalt der Schüssel (10) der Einrichtung (1) zu wiegen, umfassend mindestens zwei Wiegesensoren (31),
**dadurch gekennzeichnet, dass** die Wiegevorrichtung (30) im Innenvolumen der Basis (20) angeordnet ist, und dadurch, dass die Einrichtung (1) eine Stützplatte (21) umfasst, die von der Basis (20) verschieden ist und dem Boden (24) der Basis (20) zugewandt angeordnet ist, wobei die Wiegesensoren (31) jeweils mindestens einen ersten Abschnitt, der auf dem Boden (24) der Basis (20) positioniert ist, und mindestens einen zweiten Abschnitt, der auf einem Teil der Stützplatte (21) positioniert ist, umfassen.

2. Einrichtung nach Anspruch 1, wobei die Wiegevorrichtung (30) auf dem Boden (24) der Basis (20) in einer oder mehreren Aufnahmen positioniert ist, die hierfür vorgesehen sind und auf dem Boden (24) der Basis (20) eingerichtet sind.

3. Einrichtung nach einem der Ansprüche 1 oder 2, wobei mindestens einer der Wiegesensoren (31) ein Sensor mit Dehnungsmessstreifen (31b) ist.

4. Einrichtung nach Anspruch 3, wobei die Wiegevorrichtung vier Wiegesensoren (31) umfasst, deren Dehnungsmessstreifen (31b) in einer Wheatstone-Brücke verbunden sind.

5. Einrichtung nach einem der Ansprüche 1 bis 4, wobei der Boden (24) einstückig mit der mindestens einen Seitenwand (22a) der Basis (20) oder verschieden von der mindestens einen Seitenwand (22a) der Basis (20) gebildet sein kann.

6. Einrichtung nach einem der Ansprüche 1 bis 5, wobei die mindestens eine Seitenwand (22a) einen Umfangsrand umfasst, der am Umfang des Bodens (24) der Basis (20) eine Rundung umfasst.

7. Einrichtung nach einem der Ansprüche 1 bis 6, wobei die Schüssel (10) einen unteren Abschnitt (12) umfasst, der angepasst ist, um mit einem auf der Basis der Einrichtung (1) angeordneten Sockel (55) zusammenzuwirken.

8. Einrichtung nach einem der Ansprüche 1 bis 7, die eine Steuereinheit (70) umfasst, die konfiguriert ist, um mindestens die Wiegevorrichtung (30) zu steuern.

9. Einrichtung nach Anspruch 8, wobei die Steuereinheit ein Anzeigeelement (74) umfasst, das konfiguriert ist, um Gewichtsinformationen des Inhalts der Schüssel (10) anzuzeigen, die von dem mindestens einen Wiegesensor (31) gemessen werden.

10. Einrichtung nach einem der Ansprüche 1 bis 9, die mindestens einen Fuß (80) umfasst, der unabhängig von der Position der Wiegesensoren (31) auf der Stützplatte (21) angeordnet ist.

## Claims

1. A food preparation and/or cooking appliance (1), such as a food processor, comprising at least:
- a food preparation and/or cooking bowl (10) comprising at least one internal volume for cooking and/or preparation,
- a base (20) on which the bowl (10) is arranged in the operating state of the appliance (1), the base (20) comprising at least one bottom (24) and at least one side wall (22) extending from the bottom (24) in a substantially secant direction, the bottom (24) and said at least one side wall (22) delimiting an internal volume,
- a weighing device (30) configured to weigh at least the contents of the bowl (10) of the appliance (1) comprising at least two weighing sensors (31),
**characterised in that** the weighing device (30) is arranged in the internal volume of the base (20), and **in that** the appliance (1) comprises a support plate (21) that is separate from the base (20) and arranged facing the bottom (24) of the base (20), the weighing sensors (31) each comprising at least one first portion positioned on the bottom (24) of the base (20) and at least one second portion positioned on a part of the support plate (21).

2. The appliance according to claim 1, wherein the weighing device (30) is positioned on the bottom (24) of the base (20) in one or more dedicated housings provided on the bottom (24) of the base (20).

3. The appliance according to any one of claims 1 or 2, wherein at least one of the weighing sensors (31) is a strain gauge sensor (31b).

4. The appliance according to claim 3, wherein the weighing device comprises four weighing sensors (31), the strain gauges (31b) of which are connected in a Wheatstone bridge.

5. The appliance according to any one of claims 1 to 4, wherein the bottom (24) may be formed integrally with said at least one side wall (22a) of the base (20) or separately from said at least one side wall (22a) of the base (20).

6. The appliance according to any one of claims 1 to 5, wherein said at least one side wall (22a) comprises a peripheral rim forming a fillet at the periphery of the bottom (24) of the base (20).

7. The appliance according to any one of claims 1 to 6, wherein the bowl (10) comprises a lower portion (12) shaped to co-operate with a stand (55) arranged on the base of the appliance (1).

8. The appliance according to any one of claims 1 to 7, comprising a control unit (70) configured to control at least the weighing device (30).

9. The appliance according to claim 8, wherein the control unit comprises a display member (74) configured to display weight information of the contents of the bowl (10), measured by said at least one weighing sensor (31).

10. The appliance according to any one of claims 1 to 9, comprising at least one foot (80) arranged on the support plate (21) independently of the position of the weighing sensors (31).
